(19) Europäisches Patentamt
European Patent Office
Office européen des brevets

(11) **EP 2 648 955 B1**

(12) **EUROPÄISCHE PATENTSCHRIFT**

(45) Veröffentlichungstag und Bekanntmachung des Hinweises auf die Patenterteilung:
**16.08.2017 Patentblatt 2017/33**

(21) Anmeldenummer: **11764552.3**

(22) Anmeldetag: **04.10.2011**

(51) Int Cl.:
***B60W 50/038*** *(2012.01)*     ***B60W 50/14*** *(2012.01)*

(86) Internationale Anmeldenummer:
**PCT/EP2011/067334**

(87) Internationale Veröffentlichungsnummer:
**WO 2012/076215 (14.06.2012 Gazette 2012/24)**

(54) **VERFAHREN UND VORRICHTUNG ZUM EINLEITEN EINES NOTLAUFBETRIEBS EINES KRAFTFAHRZEUGS**

METHOD AND DEVICE FOR INITIATING AN EMERGENCY OPERATING MODE OF A MOTOR VEHICLE

PROCÉDÉ ET DISPOSITIF SERVANT À INITIALISER UN FONCTIONNEMENT EN MODE D'URGENCE D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2010 DE 102010062484**

(43) Veröffentlichungstag der Anmeldung:
**16.10.2013 Patentblatt 2013/42**

(73) Patentinhaber: **Robert Bosch GmbH
70442 Stuttgart (DE)**

(72) Erfinder:
• **NIEMANN, Holger
Shanghai
200120 (CN)**
• **SCHLESER, Roland
66125 Saarbruecken (DE)**
• **HEYL, Andreas
71640 Ludwigsburg (DE)**
• **KANTH, Daniel
71636 Ludwigsburg (DE)**

(56) Entgegenhaltungen:
**EP-A2- 0 906 845      DE-A1-102004 051 963
DE-A1-102009 001 213   DE-A1-102009 014 624**

**Beschreibung**

Die vorliegende Erfindung betrifft ein Verfahren zum Einleiten eines Notlaufbetriebs eines Kraftfahrzeugs mit den Schritten: Erfassen einer Fehlfunktion einer Komponente des Kraftfahrzeugs, Prüfen, ob ein Notlaufbetrieb möglich ist, Melden der Fehlfunktion an den Fahrer und Einleiten des Notlaufbetriebs unter vorbestimmten Bedingungen.

Ferner betrifft die vorliegende Erfindung eine Vorrichtung zum Einleiten eines Notlaufbetriebs eines Kraftfahrzeugs mittels einer Steuereinheit.

Stand der Technik

Auf dem Gebiet der Kraftfahrzeugtechnik ist es allgemein bekannt Fehlfunktionen von Komponenten des Kraftfahrzeugs zu erfassen und auf dieselben zu reagieren. Dabei ist es bekannt, das Fahrzeug in einem Notbetrieb sicher weiter zu betreiben oder aber den Fahrbetrieb sicher zu beenden. Bei den üblichen Sicherheitskonzepten für Steuergeräte im Automobilbereich ist die Reaktion bei dem Auftreten gefährlicher Fehlfunktionen häufig das Abstellen des fehlerbehafteten Systems, insbesondere bei Fehlfunktionen im Antriebsstrang bzw. im Motorbereich. Dies hat zur Folge, dass der Fahrbetrieb üblicherweise beendet wird. Fehlerbehaftete Komponenten, die einen sporadisch auftretenden Fehler aufweisen, können auch z.B. durch Aus- und Einschalten der Zündung reaktiviert werden. Sofern der sporadisch auftretende Fehler nach Reaktivierung nicht mehr vorhanden ist, kann das System unter Umständen mit Einschränkungen wieder in Betrieb genommen werden.

Bei dauerhaften Fehlern, die jedoch nicht unmittelbar sicherheitsrelevant bzw. gefährlich sind, kann das betroffene System unter bestimmten Bedingungen, wie z.B. mit einem Warnsignal an den Fahrer, weiter betrieben werden. Nach dem derzeit üblichen Sicherheitskonzept wird jedoch entweder das System automatisch abgeschaltet oder aber automatisch mit entsprechender Warnung an den Fahrer weiter betrieben.

Nachteilig bei den Systemen aus dem Stand der Technik ist es, dass nicht sicher festgestellt werden kann, ob der Fahrer die Warnung tatsächlich wahrgenommen hat, da z.B. die Betätigung der Zündung nicht von der üblichen Verwendung im Normalbetrieb unterschieden werden kann. Ferner bleibt bei dem bekannten Sicherheitskonzept unberücksichtigt, dass bestimmte Fehler bei entsprechender Kenntnis des Fahrers keine oder aber eine kontrollierbare Gefährdung darstellen und somit das Fahrzeug in einem Notbetrieb trotzdem sicher weiter betreibbar ist. DE 10 2009 014624 A1 offenbart ein Verfahren zur Anzeige einer Störung im Kraftfahrzeug. Im Störungsfall wird dem Fahrer eine Warnung und eine empfohlene Maßnahme zur Kenntnisnahme und zur Quittierung mitgeteilt. Wenn die Quittierung nicht innerhalb eines vorgegebenen Zeitfensters erfolgt, wird ein Sicherheitsmodus aktiviert.

Es ist daher die Aufgabe der vorliegenden Erfindung, die bekannten Sicherheitssysteme derart weiterzuentwickeln, dass die Wahrscheinlichkeit des Abschaltens des Gesamtsystems bei Fehlfunktion von Einzelkomponenten des Kraftfahrzeugs reduziert ist.

Offenbarung der Erfindung

Die vorliegende Erfindung stellt ein Verfahren zum Einleiten eines Notlaufbetriebs eines Kraftfahrzeugs bereit mit den Schritten: Erfassen einer Fehlfunktion einer Komponente des Kraftfahrzeugs, Prüfen, ob ein Notlaufbetrieb möglich ist, Melden der Fehlfunktion an den Fahrer, Einleiten des Notlaufbetriebs unter vorbestimmten Bedingungen, wobei der Notlaufbetrieb nach aktiver Bestätigung durch den Fahrer eingeleitet wird.

Ferner wird die obige Aufgabe gelöst durch eine Vorrichtung zum Einleiten eines Notlaufbetriebs eines Kraftfahrzeugs mit einer Steuereinheit, die dazu ausgelegt ist, das Verfahren der oben genannten Art durchzuführen.

Vorteile der Erfindung

Durch die vorliegende Erfindung kann die Wahrscheinlichkeit einer Unterbrechung des Fahrbetriebs reduziert werden, indem der Fahrer über die Bedingungen des

Notlaufbetriebs und potentielle Gefährdungen informiert wird und durch aktive Bestätigung sichergestellt ist, dass er über die Konsequenzen Kenntnis erlangt hat. In diesem Fall ist ein Weiterbetrieb des Gesamtsystems also des Kraftfahrzeugs auch bei sicherheitsrelevanten bzw. sicherheitskritischen oder potentiell gefährlichen Fehlfunktionen möglich.

Die Einleitung des Notlaufbetriebs erfolgt mit anderen Worten so, dass der Fahrer über die Fehlfunktion informiert wird und über potentiell gefahrbringende Situationen in Kenntnis gesetzt wird und mit dieser Kenntnis entscheiden kann, ob der Notlaufbetrieb eingeleitet werden soll. Dabei ist es von Vorteil, dass der Fahrer unter Berücksichtigung der gefahrbringenden Situationen und der Gefährdung Maßnahmen ergreifen kann bzw. sensibilisiert ist, in den gefahrbringenden Situationen entsprechend zu reagieren. Dadurch kann auch bei allgemein gefahrbringenden Fehlfunktionen ein Notlaufbetrieb mit kalkulierbarem Risiko bzw. reduzierten Risiko eingeleitet werden.

Von besonderem Vorteil ist es, wenn ein Risikowert des Notlaufbetriebs bestimmt wird, und zwar auf der Grundlage einer Schwere der Fehlfunktion, einer Wahrscheinlichkeit für eine gefahrbringende Situation und/oder einer Kontrollierbarkeit der gefahrbringenden Situation durch den Fahrer. Anhand dieses Risikowertes kann entschieden werden, ob der Notlaufbetrieb möglich oder vertretbar ist, wobei berücksichtigt wird, dass der Fahrer mit positivem Wissen über eine Fehlfunktion entsprechend reagieren kann, wodurch das Risiko im Notlaufbetrieb reduziert ist.

Dabei ist es bevorzugt, wenn der Risikowert dem Fahrer angezeigt wird.

Auf diese Weise kann der Fahrer selbst beurteilen, ob er das entsprechende Risiko eingehen möchte.

Weiterhin ist es bevorzugt, wenn die vorbestimmten Bedingungen abhängig sind von der Art der Fehlfunktion.

Dadurch kann der weitere Betrieb des Kraftfahrzeugs individuell an die Fehlfunktion angepasst werden.

Ferner ist es bevorzugt, wenn dem Fahrer die vorbestimmten Bedingungen für den Notlaufbetrieb angezeigt werden.

Dadurch kann der Fahrer entsprechend dem Notlaufbetrieb zustimmen, oder diesen ablehnen und ist informiert, welche Funktionen unter Umständen systembedingt eingeschränkt sind.

Weiter ist es bevorzugt, wenn wenigstens ein physikalischer Parameter einer Kraftfahrzeugkomponente im Notlaufbetrieb begrenzt wird.

Dadurch kann je nach Fehlfunktion die Wahrscheinlichkeit für eine gefahrbringende Situation reduziert werden.

Weiterhin ist es bevorzugt, wenn der Fahrer im Notlaufbetrieb vor den gefahrbringenden Situationen gewarnt wird.

Dadurch kann die Kontrollierbarkeit der gefahrbringenden Situationen durch den Fahrer erhöht werden und das Risiko entsprechend reduziert werden.

Ferner ist es bevorzugt, wenn der Fahrer im Notlaufbetrieb gewarnt wird, welche Funktion des Kraftfahrzeugs eingeschränkt nutzbar ist.

Dadurch kann der Fahrer sich im Vorfeld auf die eingeschränkte Nutzbarkeit gewisser Funktionen einstellen und entsprechende Situationen vermeiden. Dadurch kann das Risiko des Notlaufbetriebs weiter reduziert werden.

Weiterhin ist es bevorzugt, wenn die Bestätigung durch den Fahrer mittels einer vordefinierten Bestätigungssequenz einer Bedieneinheit erfolgt.

Dadurch kann sichergestellt werden, dass der Fahrer über den Notlaufbetrieb Kenntnis erlangt hat und die Bestätigung nicht lediglich zufällig erfolgt.

Kurze Beschreibung der Zeichnungen

Fig. 1 zeigt in schematischer Form ein Kraftfahrzeug mit einem Antriebsstrang, der ein Steuergerät zum Erfassen von Fehlfunktionen und eine entsprechende Bedieneinheit aufweist; und
Fig. 2 zeigt ein schematisches Ablaufdiagramm eines Verfahrens zum Einleiten eines Notlaufbetriebs.

Ausführungsformen der Erfindung

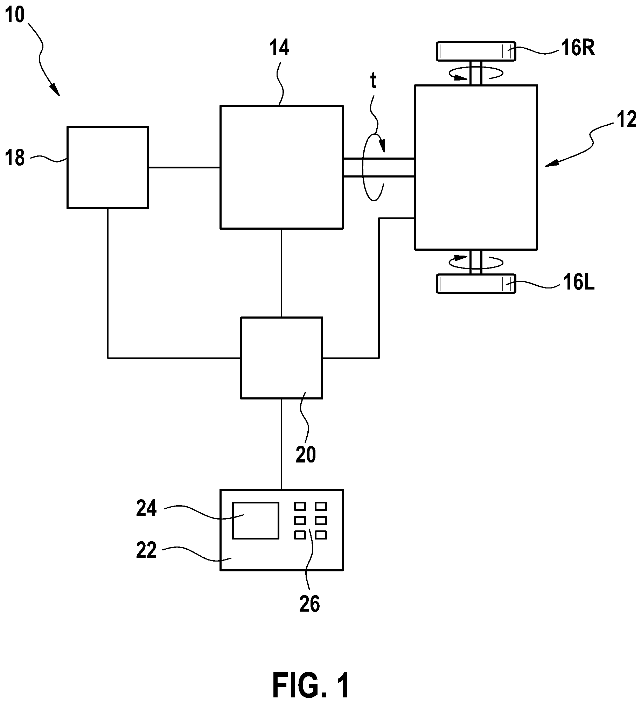

In Fig. 1 ist ein Kraftfahrzeug schematisch dargestellt und allgemein mit 10 bezeichnet. Das Kraftfahrzeug 10 weist einen Antriebsstrang 12 auf, der im vorliegenden Falle eine elektrische Maschine 14 zum Bereitstellen von Antriebsleistung beinhaltet. Die elektrische Maschine 14 stellt an einer Antriebswelle ein Drehmoment t bereit und dreht mit einer einstellbaren Drehzahl. Der Antriebsstrang 12 dient zum Antreiben von angetriebenen Rädern 16L, 16R des Fahrzeugs 10.

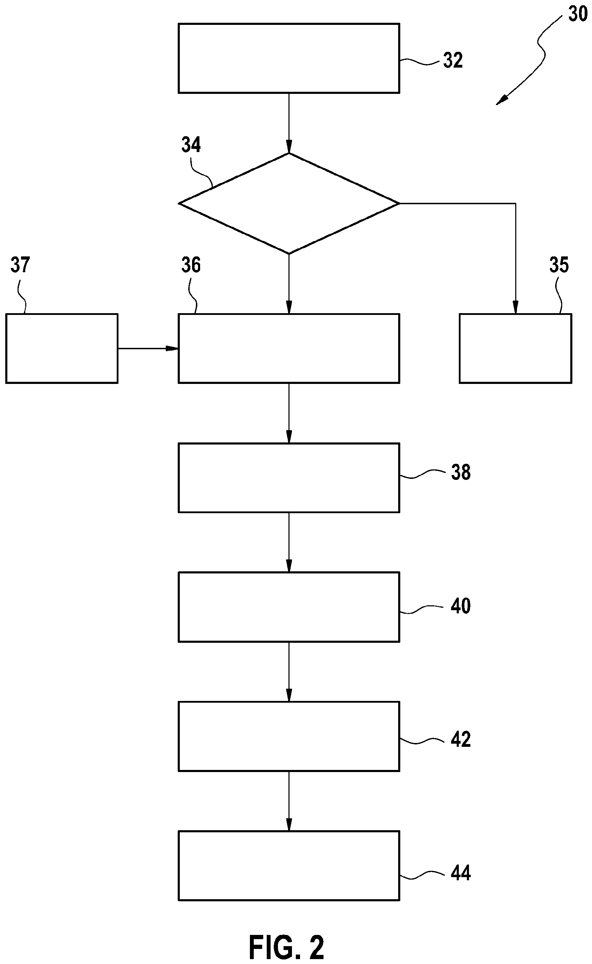

Der Antriebsstrang 12 kann dazu eingerichtet sein, das Fahrzeug 10 mittels der elektrischen Maschine 14 anzutreiben. Alternativ kann die elektrische Maschine 14 Teil eines Hybrid-Antriebsstranges 12 sein, wobei der Antriebsstrang einen in Fig. 2 nicht näher bezeichneten Antriebsmotor wie einen Verbrennungsmotor oder dergleichen beinhalten kann. Alternativ kann der Antriebsstrang 12 ausschließlich mittels eines nicht näher bezeichneten Antriebsmotors wie eines Verbrennungsmotors oder dergleichen angetrieben werden. Ferner kann der Antriebsstrang ein Getriebe oder dergleichen aufweisen.

Die elektrische Maschine 14 wird mittels einer Ansteuerungselektronik 18 angesteuert. Die Ansteuerungselektronik 18 ist mit einer elektrischen Energieversorgung (z.B. Akkumulator) verbunden und dient dazu, die elektrische Maschine 14 zu steuern und mit elektrischer Energie zu versorgen.

Das Kraftfahrzeug 10 weist eine Steuereinheit 20 auf, die mit verschiedenen Komponenten des Kraftfahrzeugs 10, insbesondere mit der Ansteuerungselektronik 18, der elektrischen Maschine 14 verbunden ist. Die Steuereinheit 20 ist ferner verbunden mit einer Bedieneinheit 22, die eine Ausgabeeinheit 24 und eine Eingabeeinheit 26 aufweist.

Die Steuereinheit 20 überwacht mittels nicht dargestellter Sensoren die Funktionen von verschiedenen Komponenten des Kraftfahrzeugs 10, insbesondere der Ansteuerungselektronik 18 und der elektrischen Maschine 14. Die Steuereinheit 20 kann dadurch auch Fehlfunktionen von einzelnen Komponenten des Kraftfahrzeugs 10 erfassen. Die Steuereinheit 20 weist vorzugsweise Komponenten wie eine Recheneinheit und einen Speicher auf und ist dazu ausgelegt, auf Grundlage eines erkannten Fehlers und auf Grundlage von hinterlegten Daten festzustellen, ob ein Notlaufbetrieb unter bestimmten Bedingungen möglich ist. Die Steuereinheit 20 ermittelt dafür ein Risiko eines derartigen Notlaufbetriebs und leitet ein Warnsignal an die Bedieneinheit 22 weiter. Die Bedieneinheit 22 zeigt über die Ausgabeeinheit 24 dem Fahrer ein entsprechendes Warnsignal an. Der Fahrer bestätigt über die Eingabeeinheit 26 den Notlaufbetrieb. Die Bestätigung des Notlaufbetriebs wird an die Steuereinheit 20 weitergeleitet und die Steuereinheit 20 steuert die Komponenten des Kraftfahrzeugs entsprechend unter vorbestimmten Bedingungen.

Die vorbestimmten Bedingungen können bspw. Begrenzung der Drehzahl oder des Drehmoments t sein, oder aber eine Begrenzung der elektrischen Spannung, die durch die Ansteuerungselektronik 18 der elektrischen Maschine 14 bereitgestellt wird.

Die Bestätigung des Notlaufbetriebs durch den Fahrer kann auch durch eine bestimmte Sequenz von Brems- und Gaspedalbetätigungen erfolgen.

Die Ausgabeeinheit 24 der Bedieneinheit 22 ist ferner dazu ausgelegt, textuelle oder auditive Warnungen dauerhaft an den Fahrer abzugeben, um den Fahrer während des gesamten Notlaufbetriebs zu warnen. Ferner kann die Ausgabeeinheit 24 textuelle und/oder auditive Anweisungen an den Fahrer abgeben, welche Aktion aktuell vermieden werden sollte oder wie entsprechend auf zukünftige Situationen reagiert werden sollte.

Fig. 2 zeigt ein schematisches Ablaufdiagramm des erfindungsgemäßen Verfahrens zum Einleiten eines Notlaufbetriebs des Kraftfahrzeugs 10.

Das Verfahren ist in Fig. 2 allgemein mit 30 bezeichnet. Das Verfahren 30 wird eingeleitet mit einer Fehlererkennung 32, die über die Steuereinheit 20 erfolgt. Auf Grundlage der Art des detektierten Fehlers bzw. der Fehlfunktion einer Komponente des Kraftfahrzeugs wird bei 34 beurteilt, ob ein Notlaufbetrieb bei einer derartigen Fehlfunktion möglich ist. Sofern festgestellt wird, dass kein Notlaufbetrieb bei einer derartigen Fehlfunktion möglich ist, endet das Verfahren bei 35 und der Fahrbetrieb wird mit einer vorbestimmten Sequenz sicher beendet. Sofern festgestellt wird, dass ein Notlaufbetrieb grundsätzlich möglich ist, werden bei 36 bestimmte Notlaufbedingungen festgelegt bzw. definiert. Die Notlaufbedingungen werden unter Berücksichtigung der erkannten Fehlfunktion und mit Hilfe von Daten einer Datenbank 37 bestimmt. Ferner wird bei 38 ein Risiko bzw. ein Risikowert des Notlaufbetriebs ermittelt, und zwar auf Grundlage einer Schwere der Fehlfunktion, einer Wahrscheinlichkeit für eine gefahrbringende Situation und einer Kontrollierbarkeit der gefahrbringenden Situation durch den Fahrer. Das Bestimmen des Risikos erfolgt vorzugsweise durch die Steuereinheit 20. Das Bestimmen der Schwere der Fehlfunktion erfolgt vorzugsweise mittels Rückgriff auf Daten, die in einer Datenbank 37 bzw. einer Speichereinheit der Steuereinheit 20 hinterlegt sind. Zur Ermittlung der Wahrscheinlichkeit für eine gefahrbringende Situation, kann ebenfalls auf die Datenbank 37 zurückgegriffen werden, wobei allerdings auch das Fahrverhalten und zusätzliche Messwerte, wie z.B. Umgebungsbedingungen (Witterungsbedingungen), Fahrverhalten des Fahrers, Beladungszustand oder dergleichen berücksichtigt werden können. Die Kontrollierbarkeit durch den Fahrer kann ebenfalls mittels Rückgriff auf die Datenbank 37 erfolgen. Die Kontrollierbarkeit durch den Fahrer kann unter Umständen durch entsprechende Warnsignale bzw. durch grundsätzliche Sensibilisierung des Fahrers durch die Warnsignale erhöht und dadurch das Risiko verringert werden.

Der Risikowert wird von der Steuereinheit 20 beispielsweise entsprechend der Norm ISO 26262 oder ICE 61508 ermittelt nach der Formel:

$$Risiko = \frac{Schwere * Wahrscheinlichkeit}{Kontrollierbarkeit},$$

wobei Schwere die Schwere des Fehlers bzw. der Fehlfunktion, Wahrscheinlichkeit die Wahrscheinlichkeit für eine gefahrbringende Situation und Kontrollierbarkeit die Kontrollierbarkeit durch den Fahrer ist. Aus dieser Formel ist ersichtlich, dass mit zunehmender Schwere und mit zunehmender Wahrscheinlichkeit das Risiko bzw. der Risikowert zunimmt und mit zunehmender Kontrollierbarkeit durch den Fahrer entsprechend abnimmt bzw. reduziert ist.

Die Wahrscheinlichkeit einer gefahrbringenden Situation kann auch durch entsprechende Warnung des Fahrers reduziert werden, da der Fahrer entsprechend der Warnung davon abgehalten werden kann, das System in eine derartige Situation zu bringen, z.B. durch Anpassen des Fahrverhaltens. Weiterhin kann die Kontrollierbarkeit durch den Fahrer mittels entsprechender Warnung verbessert werden, da die Reaktionszeit des Fahrers und auch die Art der Reaktion des Fahrers durch die Warnung verbessert werden kann.

Nach ermitteltem Risiko wird bei 40 das Warnsignal an den Fahrer abgegeben. Das Warnen 40 kann über die Bedieneinheit 22 erfolgen. Das Warnsignal kann die Notlaufbedingungen, das ermittelte Risiko und entsprechende textuelle oder auditive Warnungen enthalten.

Nach Abgabe des Warnsignals erfolgt bei 42 die Bestätigung des Notlaufbetriebs durch den Fahrer. Die Bestätigung erfolgt vorzugsweise über die Eingabeeinheit 26, und zwar vorzugsweise über eine vordefinierte Sequenz von Eingaben, um sicherzustellen, dass die Warnung vom Fahrer tatsächlich wahrgenommen wurde und der Notlaufbetrieb aktiv bestätigt wurde.

Nach Bestätigung 42 durch den Fahrer erfolgt ein Schritt 44 des Einleitens des Notlaufbetriebs durch die Steuereinheit 20. Sofern die Bestätigung durch den Fahrer nicht erfolgt, wird der Notlaufbetrieb nicht eingeleitet und evtl. der Fahrbetrieb mit einer vorbestimmten Sequenz sicher beendet.

Im Allgemeinen können in dem Notlaufbetrieb die Notlaufbedingungen durch die Steuereinheit 20 festgelegt werden, wobei vorzugsweise physikalische Parameter der Kraftfahrzeugkomponenten begrenzt werden. Die Begrenzung kann eine Drehmomentbegrenzung, eine Drehzahlbegrenzung, eine Geschwindigkeitsbegrenzung oder dergleichen sein.

**Patentansprüche**

1. Verfahren (30) zum Einleiten eines Notlaufbetriebs eines Kraftfahrzeugs (10) mit den Schritten:

    - Erfassen einer Fehlfunktion (32) einer Komponente des Kraftfahrzeugs (10),

- Prüfen, ob ein Notlaufbetrieb möglich ist (34),
- Melden der Fehlfunktion an den Fahrer (40),
- Einleiten des Notlaufbetriebs (44) unter vorbestimmten Bedingungen,

wobei
der Notlaufbetrieb nach aktiver Bestätigung (42) durch den Fahrer eingeleitet wird.

2. Verfahren nach Anspruch 1, wobei ein Risikowert des Notlaufbetriebs bestimmt wird (38) auf Grundlage einer Schwere der Fehlfunktion, einer Wahrscheinlichkeit für eine gefahrbringende Situation und/oder einer Kontrollierbarkeit der Situation durch den Fahrer.

3. Verfahren nach Anspruch 2, wobei der Risikowert dem Fahrer angezeigt wird.

4. Verfahren nach einem der Ansprüche 1 bis 3, wobei die vorbestimmten Bedingungen abhängig sind von der Art der Fehlfunktion.

5. Verfahren nach einem der Ansprüche 1 bis 4, wobei dem Fahrer die vorbestimmten Bedingungen für den Notlaufbetrieb angezeigt werden.

6. Verfahren nach einem der Ansprüche 1 bis 5, wobei wenigstens ein physikalischer Parameter einer Kraftfahrzeugkomponente im Notlaufbetrieb begrenzt wird.

7. Verfahren nach einem der Ansprüche 1 bis 6, wobei der Fahrer im Notlaufbetrieb vor den gefahrbringenden Situationen gewarnt wird.

8. Verfahren nach einem der Ansprüche 1 bis 7, wobei der Fahrer im Notlaufbetrieb gewarnt wird, welche Funktion des Kraftfahrzeugs eingeschränkt nutzbar ist.

9. Verfahren nach einem der Ansprüche 1 bis 8, wobei die Bestätigung durch den Fahrer mittels einer vordefinierten Bestätigungssequenz einer Bedieneinheit erfolgt.

10. Vorrichtung zum Einleiten eines Notlaufbetriebs eines Kraftfahrzeugs (10) mit einer Steuereinheit (20), die dazu ausgelegt ist, das Verfahren (30) nach einem der Ansprüche 1 bis 9 auszuführen.

**Claims**

1. Method (30) for initiating an emergency operating mode of a motor vehicle (10) comprising the steps:

- detecting a malfunction (32) of a component of the motor vehicle (10),
- testing whether an emergency operating mode is possible (34),
- signalling the malfunction to the driver (40), and
- initiating the emergency operating mode (44) under predetermined conditions,

wherein
the emergency operating mode is initiated after active confirmation (42) by the driver.

2. Method according to Claim 1, wherein a risk value of the emergency operating mode is determined (38) on the basis of the severity of the malfunction, a probability of a hazardous situation and/or a possibility of the situation being controlled by the driver.

3. Method according to Claim 2, wherein the risk value is displayed to the driver.

4. Method according to one of Claims 1 to 3, wherein the predetermined conditions are dependent on the type of malfunction.

5. Method according to one of Claims 1 to 4, wherein the predetermined conditions for the emergency operating mode are displayed to the driver.

6. Method according to one of Claims 1 to 5, wherein at least one physical parameter of a motor vehicle component is limited in the emergency operating mode.

7. Method according to one of Claims 1 to 6, wherein in the emergency operating mode the driver is warned about the hazardous situations.

8. Method according to one of Claims 1 to 7, wherein in the emergency operating mode the driver is warned which function of the motor vehicle can be used in a restricted fashion.

9. Method according to one of Claims 1 to 8, wherein the confirmation by the driver is carried out by means of a predefined confirmation sequence of an operator control unit.

10. Device for initiating an emergency operating mode of a motor vehicle (10) with a control unit (20) which is configured to carry out the method (30) according to one of Claims 1 to 9.

**Revendications**

1. Procédé (30) d'initiation d'un mode de fonctionnement de secours d'un véhicule automobile (10), comprenant les étapes suivantes :

- détection d'un défaut de fonctionnement (32) d'un composant du véhicule automobile (10),
- vérification si un mode de fonctionnement de secours est possible (34),
- signalement du défaut de fonctionnement au conducteur (40),
- initiation du mode de fonctionnement de secours (44) sous des conditions prédéfinies,

le mode de fonctionnement de secours étant initié après une confirmation active (42) par le conducteur.

2. Procédé selon la revendication 1, un indice de risque du mode de fonctionnement de secours étant défini (38) en se basant sur une gravité du défaut de fonctionnement, une probabilité d'une situation dangereuse et/ou une aptitude à maîtriser la situation par le conducteur.

3. Procédé selon la revendication 2, l'indice de risque étant indiqué au conducteur.

4. Procédé selon l'une des revendications 1 à 3, les conditions prédéfinies étant dépendantes de la nature du défaut de fonctionnement.

5. Procédé selon l'une des revendications 1 à 4, les conditions prédéfinies pour le mode de fonctionnement de secours étant indiquées au conducteur.

6. Procédé selon l'une des revendications 1 à 5, au moins un paramètre physique d'un composant du véhicule étant limité dans le mode de fonctionnement de secours.

7. Procédé selon l'une des revendications 1 à 6, le conducteur, en mode de fonctionnement de secours, étant averti avant les situations dangereuses.

8. Procédé selon l'une des revendications 1 à 7, le conducteur, en mode de fonctionnement de secours, étant averti de la fonction du véhicule automobile qui est utilisable avec restrictions.

9. Procédé selon l'une des revendications 1 à 8, la confirmation par le conducteur étant effectuée au moyen d'une séquence de confirmation prédéfinie d'une unité de commande.

10. Dispositif pour initier un mode de fonctionnement de secours d'un véhicule automobile (10), comprenant une unité de commande (20) qui est conçue pour mettre en oeuvre le procédé (30) selon l'une des revendications 1 à 9.

**FIG. 1**

**FIG. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009014624 A1